# EUROPEAN PATENT SPECIFICATION

(11) **EP 1 967 625 B1**
(45) Date of publication and mention of the grant of the patent: **18.04.2018**
(21) Application number: 06810563.4
(22) Date of filing: 26.09.2006
(51) Int. Cl.: D04B 1/22, D04C 1/12, F16J 15/22, D02G 3/44

(54) **YARN AND GLAND PACKING**
GARN UND STOFFBUCHSPACKUNG
FILASSE ET PRESSE-ÉTOUPE

(30) Priority: 16.11.2005 JP 2005331183
(43) Date of publication of application: 10.09.2008
(73) Proprietor: NIPPON PILLAR PACKING CO., LTD., Osaka-shi, Osaka 532-0022 (JP)
(72) Inventor: UEDA, Takahisa, Sanda-shi, Hyogo 669-1333 (JP)
(74) Representative: Fleuchaus, Michael A.
(86) International application number: PCT/JP2006/319038
(87) International publication number: WO 2007/058019

(56) References cited:
- EP-A2- 1 098 116
- JP-A- 06 074 345
- JP-A- 09 280 379
- JP-A- S63 308 275
- US-A- 4 705 722
- US-A- 5 549 306

## Description

### Technical Field

The present invention relates to a yarn and a gland packing, and more particularly to a yarn which is to be used in a braided type gland packing, a string-like gasket, refractory cloth, or the like, and a gland packing which is produced by using the yarn.

### Background Art

As a conventional art relating to a gland packing which is to be used in a shaft seal part of a fluid apparatus or the like, and a yarn used in the packing, known is a technique in which expanded graphite is used as a base material as disclosed in Patent Reference 1 and Patent Reference 2. Patent References 1 and 2 disclose that a yarn for a gland packing is formed by filling the interior of a tubular member configured by knitting or braiding a fibrous material (knitting, braiding, or the like), with a long expanded graphite sheet. A gland packing is produced by twisting or braiding using plural yarns which are thus produced (for example, eight-strand square braiding which uses eight yarns).

The conventional art which uses a thus configured yarn made of expanded graphite is conducted with the intention that, since the outer periphery of the expanded graphite base material is covered by knitting with a reinforcing material, or the like, the tubular member configured by knitting or braiding the reinforcing material counters a tensile or torsion force which is generated in each yarn when the gland packing is produced by braiding the plural yarns, and the expanded graphite base material in the tubular member is prevented from being broken.
Patent Reference 1: Japanese Patent Application Laying-Open No. 63-1863
Patent Reference 2: Japanese Patent Publication No. 6-27546

US 5 549 206 A relates to a knitting yarn for a gland packing to be used at a shaft sealing portion of a fluid device such as a pump, and also relates to a gland packing made of such knitting yarn.

EP 1 098 116 A2 relates to a packing suitably used as an expanded graphite knitting yarn of a gland packing to be used at a shaft sealing portion in a fluid apparatus, and the gland packing made of the expanded graphite knitting yarns.

JP S63 308275 A is directed to improving the usability and versatility of a worked braid-like packing.

JP 09 280379 A relates to a shaft seal part of a fluid apparatus, particularly to packing improvement consisting of knitting yarn and knitted yarn for packing using expanded graphite tape.

### Disclosure of the Invention

### Problems to be Solved by the Invention

In the case where a gland packing is produced by braiding which uses yarns of the conventional art, however, there may sometimes arise a disadvantage that the expanded graphite is partly broken and missed and only reinforcing fibers exist in the portion. This is caused because of the following reason. In the case where a yarn is bent ortwisted in order to be subjected to twisting or braiding, the expanded graphite sheet in the tubular member has a part which cannot follow the bending or twisting. Such a part protrudes from between the fibrous materials forming the tubular member. This disadvantage is caused by the phenomenon that the minimum bend radius of a yarn is not greatly reduced.

When plural yarns in a state where expanded graphite partly protrudes from between fibrous materials are subjected to twisting or braiding to be formed as a gland packing, there-fore, rubbing between adjacent yarns due to the process causes a disadvantage that the expanded graphite protruding from between fibrous materials is shaved off. When a disadvantage such as described above occurs, the sealing property of the disadvantageous portion or i.e. the missing part of the expanded graphite is reduced. This is disadvantageous.

It is an object of the invention to further improve a yarn which is formed by filling the interior of a tubular member configured by knitting or braiding a fibrous material with expanded graphite functioning as a base material, whereby a yarn mainly configured by expanded graphite is improved to be so highly flexible that the expanded graphite does not protrude in a usual bending process, in order to prevent partial missing of the expanded graphite from occurring when the yarn is twisted or braided to produce a gland packing. It is another object to obtain a gland packing which is formed by the improved yarn, and which has an excellent sealing property.

### Means for Solving the Problems

The invention is set forth in claim 1.

The invention set forth in claim 2 is characterized in that, in the yarn 1 according to claim 1, the aspect ratio h of the section is set to 1.0 to 3.

The invention set forth in claim 3 is characterized in that, in the yarn 1 according to claim 1 or 2, the thickness t of the fibrous expanded graphite 4 is set to 0.25 mm to 0.50 mm.

The invention set forth in claim 4 is characterized in that a gland packing 5 is configured into a string-like shape by bundling plural yarns 1 according to any one of claims 1 to 3, and twisting or braiding the bundled yarns.

### Effects of the Invention

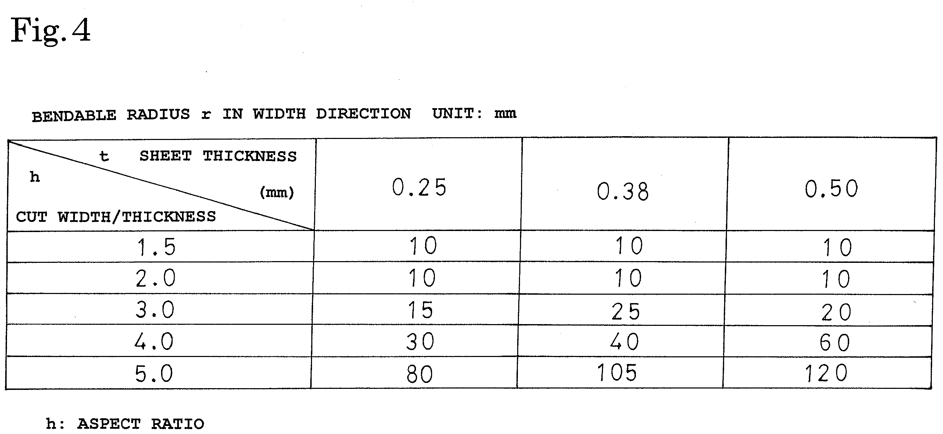

According to the invention set forth in claim 1, provided is means for using the fibrous expanded graphite 4 having a section in which the aspect ratio is set to 1 to 5 as expanded graphite to be filled into the tubular member configured by knitting or braiding a fibrous material. It has been checked that, according to the configuration, the mini-mum bend (particularly, bend in the width direction) radius of a yarn is definitely reduced as compared with a conventional yarn (see Fig. 4). In the case where the yarn is bent or twisted in order to be subjected to twisting or braiding, therefore, an expanded graphite sheet in the tubular member can sufficiently follow the bending or twisting, protruding from between fibrous materials is eliminated, and the disadvantage that, when plural yarns are subjected to twisting or braiding to be formed as a gland packing, rubbing between adjacent yarns causes expanded graphite protruding from between fibrous materials to be shaved off does not occur. Consequently, the reduction of the sealing property due to missing of the expanded graphite in the gland packing is prevented from occurring.

As a result, a yarn mainly configured by expanded graphite can be provided as a yarn which is improved to be so highly flexible that the expanded graphite does not protrude in a usual bending process, in order to prevent partial missing of the expanded graphite from occurring when the yarn is twisted or braided to produce a gland packing. When plural yarns are bundled and then twisted or braided to configure a string-like shape as set forth in claim 4, it is possible to provide an improved gland packing in which the reduction of the sealing property due to missing of the expanded graphite is prevented from occurring, and which has an excellent sealing property for a long term.

According to the invention set forth in claim 2, it is checked that, when the aspect ratio of the section of the fibrous expanded graphite is set to 1 to 3, the above-described minimum bend radius is remarkably reduced, and it is possible to provide a yarn in which the function and effects of the invention set forth in claim 1 are further enhanced. In this case, when the thickness of the fibrous expanded graphite is set to 0.25 mm to 0.50 mm as set forth in claim 3, it is possible to configure a desirable yarn which is suitable to practical use.

### Brief Description of the Drawings

[Fig. 1] Fig. 1 is a functional diagram schematically showing a manner of producing a yarn.
[Fig. 2] Fig. 2 is a perspective view showing a gland packing formed by braiding the yarn of Fig. 1.
[Fig. 3] Fig. 3 is a view showing a section shape and dimension ratio of fibrous expanded graphite.
[Fig. 4] Fig. 4 is a view showing a comparison table of a width/thickness ratio and minimum bend radius of a section of fibrous expanded graphite.
[Fig. 5] Fig. 5 is a view showing a correlation graph of a width/thickness ratio and minimum bend radius of a section of fibrous expanded graphite.
[Fig. 6] Fig. 6 is a section view of main portions showing an example of use of the gland packing.
[Fig. 7] Fig. 7 is a view showing a comparison table of characteristics between a conventional yarn and the yarn of the invention.

### Description of Reference Numerals

1 yarn
2 fibrous material
3 tubular member
4 fibrous expanded graphite
5 gland packing
t section thickness of fibrous expanded graphite
w section width of fibrous expanded graphite

### Best Mode for Carrying Out the Invention

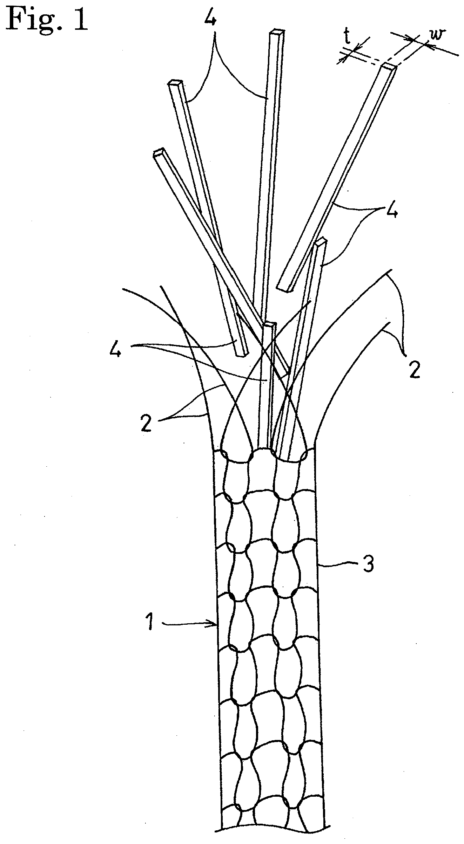

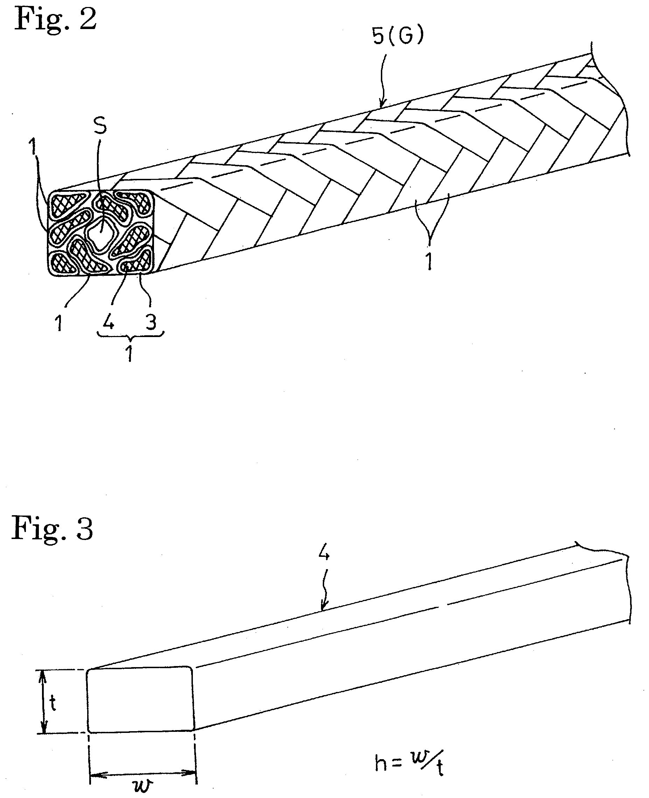

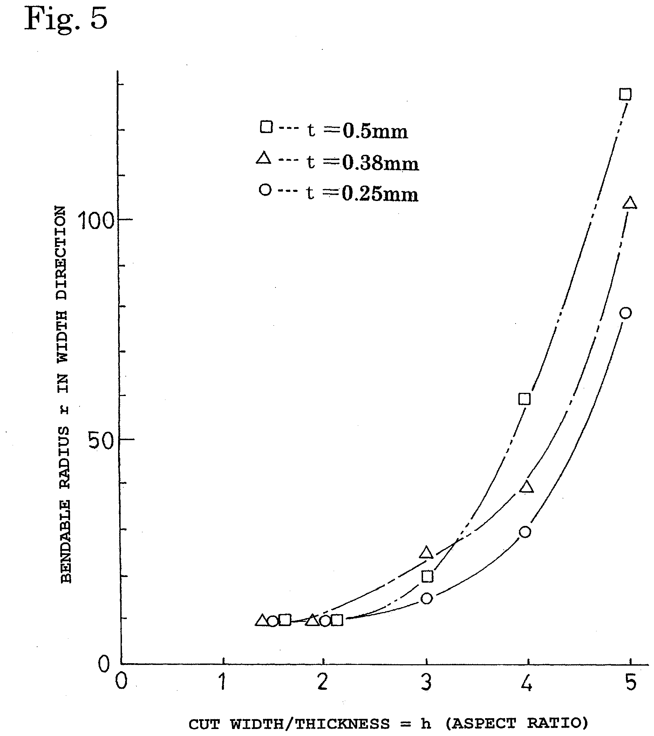

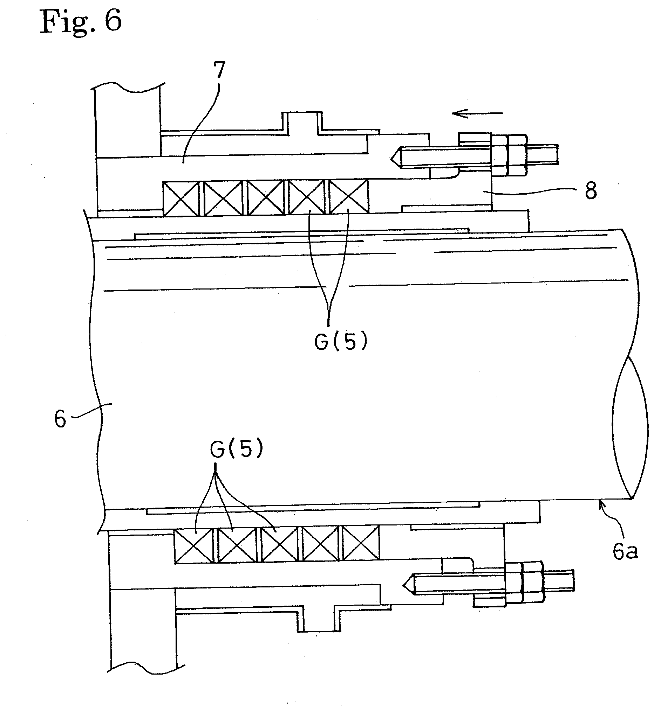

Hereinafter, an embodiment of the yarn of the invention and a gland packing using it will be described with reference to the drawings. Fig. 1 is a diagram schematically showing a manner of producing the yarn, Fig. 2 is a view showing a gland packing produced by using the yarn of Fig. 1, Fig. 3 is an enlarged view showing section dimensions of fibrous expanded graphite, Figs. 4 and 5 are views showing relational data of an aspect ratio and bend radius of the fibrous expanded graphite, and Fig. 6 is a view showing an example of use of the gland packing.

As shown in Fig. 1, the yarn 1 for a gland packing according to the invention is formed by filling the interior of a tubular member 3 configured by braiding a fibrous material 2 with fibrous expanded graphite 4 having a section in which an aspect ratio h is set to 1 to 5 (1 ≤ h ≤ 5), the aspect ratio being a value obtained by dividing the width by the thickness. As shown in Fig. 3, the aspect ratio h is a value (h = w/t) which is obtained by dividing the width w by the thickness t in the section dimensions of the fibrous expanded graphite 4. The section shape of the fibrous expanded graphite 4 may be a shape other than a rectangle, such as an ellipse or an oval.

In Figs. 4 and 5, with respect to 15 samples (yarns 1) in total of 3 kinds of the thickness t of the fibrous expanded graphite 4, or 0.25 mm, 0.38 mm, and 0.50 mm, and 5 kinds of the aspect ratio h, or 1.5, 2, 3, 4, and 5, the bendable radius in the width direction was measured to obtain data. In this case, "bendable radius" means the minimum radius at which the fibrous expanded graphite 4 can be bent in a normal state where the graphite does not break nor crack. A use manner in which the fibrous expanded graphite 4 having the thickness t of 0.25 mm is suitable as a yarn for a small-diameter gland packing, graphite of 0.38 mm is suitable as a yarn for a popular type of gland packing, and graphite of 0.50 mm is suitable as a yarn for a large-diameter gland packing may be possible.

In a yarn in which an expanded graphite sheet having a flat section shape of an aspect ratio h of 10 is used, for example, a difference is easily produced between stresses at the both ends, when a tensile force in the longitudinal direction is applied, because the width direction which is the longitudinal direction in the section shape is long. Therefore, the yarn has a property that the section shape is naturally changed to a curved shape such as a C-like shape in accordance with that the tensile force acts to relax the internal stress. In a state where an expanded graphite sheet is filled into a tubular member, however, the expanded graphite sheet is in a situation where it is physically difficult to individually change a section of the sheet into a circular shape. In a conventional yarn, when a tensile force is increased, therefore, the internal stress cannot be relaxed, and hence the yarn has no choice but to be broken. In the yarn 1 of the invention, therefore, the fibrous expanded graphite 4 in which the aspect ratio h of a section shape is 5 or less is used as described above, and hence internal stress can be relaxed to some extent without requiring a change to a curved section shape associated with pulling, and sliding between adjacent fibrous expanded graphites is improved. Consequently, it is considered that the yarn 1 having a banding performance which is practically sufficient has been realized.

As seen from the table of Fig. 4 and the graph of Fig. 5, when the aspect ratio h of the fibrous expanded graphite 4 is 5 or less, a minimum bend radius which is practically durable is obtained, and it is known that, when the aspect ratio h is 3 or less, the minimum bend radius is extremely reduced. Therefore, it is preferable that the range of the aspect ratio h is set to a range of 1.0 to 3.0 (1.0 ≤ h ≤ 3.0). In the case where h is 1, when the thickness is 0.25 mm, also the width is 0.25 mm, and it is difficult to perform physical breaking. In view of the actual situation of a breaking work, therefore, it seems that the setting where the lower limit of the aspect ratio h is set to 1 is realistic. From the experimental data of Figs. 4 and 5, it is preferable to use the yarn 1 in which the aspect ratio h is in the range of 1.5 to 3.0.

The gland packing 5 shown in Fig. 2 is configured into a string-like shape by bundling eight (an example of a plural number) yarns 1 described above in the periphery of a core member S (the core member S may be omitted), and twisting or braiding (eight-strand square braiding or the like) the bundled yarns. The shape is continuously rounded to be compression-molded, whereby a gland packing G in which a section has a rectangular shape, and the whole shape has a doughnut-like annular shape can be formed. As shown in Fig. 6, for example, the gland packing G is attached to a packing box 7 in a state where plural gland packings are arranged in the axial direction of a rotation shaft 6, and pressed by a packing gland θ in the axial direction, thereby enabling the packing to exert a sealing function on the outer peripheral face 6a of the rotation shaft 6.

### [Example 1]

A yarn of Example 1 is produced in the following manner. A large number of fibrous expanded graphites 4 which have a rectangular section shape of a thickness of 0.38 mm × a width of 1.0 mm, and which have a length of about 200 mm are inserted into the tubular member 3 configured by braiding (knitting) using an inconel wire (or a stainless steel wire or the like) having a diameter of about 0.1 mm serving as the fibrous material 2, with shifting their end portions from one another by 20 mm, thereby forming the yarn 1 having a circular (round) section shape. In the first yarn 1 of Example 1, the aspect ratio h of the fibrous expanded graphite 4 was h = 1.0/0.38 ≒ 2.63, and the weight of the first yarn 1 was 5 g/m.

Fig. 2 shows the gland packing 5 configured by using the first yarn 1 of Example 1. The gland packing 5 was produced by braiding (eight-strand square braiding or the like) eight yarns 1 of Example 1, and then applying graphite over the surface, thereby producing the gland packing 5 having a square section of 8 mm in length and 8 mm in width.

### [Example 2]

A yarn of Example 2 is produced in the following manner. Fibrous expanded graphites 4 having a section size of a thickness of 0.38 mm, a width of 1.0 mm, and a length of 200 mm are bundled while shifting their end portions from one another by 30 mm, thereby forming a long product. The outer periphery of the product is covered by the tubular member 3 configured by knitting the fibrous material 2 configured by an inconel wire having a diameter of 0.1 mm, thereby forming the yarn 1 having a circular (round) section shape. In the second yarn 1 of Example 2, the aspect ratio h of the fibrous expanded graphite 4 was h = 1.0/0.38 ≒ 2.63, and the weight of the second yarn 1 was 4 g/m.

Eight yarns 1 of Example 2 were braided, and graphite was then applied over the surface, thereby producing the gland packing 5 having a square section of 6.5 mm in length and 6.5 mm in width (see Fig. 2).

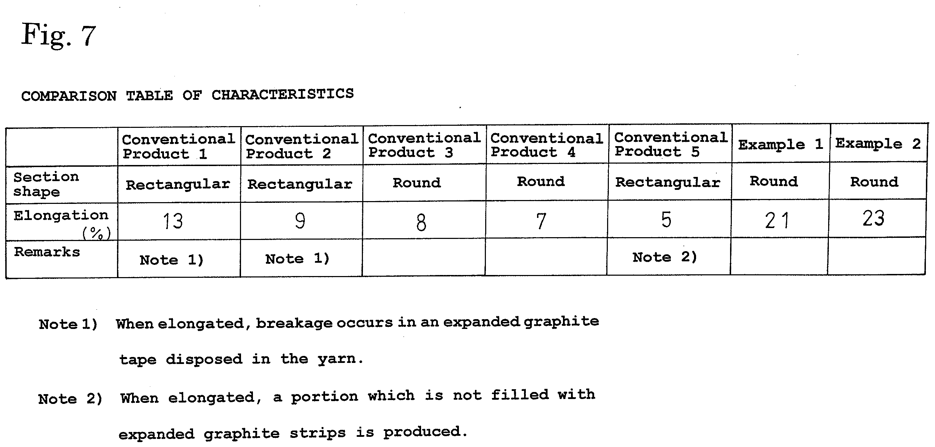

For reference, Fig. 7 shows a comparison table of characteristics between the above-described yarns of Examples 1 and 2 of the invention and yarns of Conventional products 1 to 5 having a conventional structure. The conventional products are schematically configured in the following manner. The yarn of Conventional product 1 has a structure in which plural expanded graphite sheets having a small width are stacked and the outer periphery of the stack is reinforced by a fiber. The yarn of Conventional product 2 has a structure in which the outer periphery of a string-like member configured by folding an expanded graphite tape having a large width is reinforced by a fiber. The yarn of Conventional product 3 has a structure in which an expanded graphite tape having a large width reinforced by a fiber is folded or heated. The yarn of Conventional product 4 has a structure in which the outer periphery of the yarn of Conventional product 3 is further reinforced by a fiber. The yarn of Conventional product 5 has a structure in which a tubular member formed by a fiber is filled with a strip-like expanded graphite sheet.

From the comparison table of characteristics of Fig. 7, it can be seen that the elongations of the yarns 1 of Examples 1 and 2 are definitely superior to all of the yarns of Conventional products 1 to 5, and show a high-level performance.

From the above, the yarn 1 of the invention, and the gland packing 5 configured by it have the following advantages. 1. When the number of accommodated fibrous expanded graphites is changed, a yarn having an arbitrary thickness can be produced. 2. Sliding between fibrous expanded graphites is excellent, and hence expanded graphite is not broken, and can largely elongate. 3. A section of a fiber bundle is easily deformed to a round shape, and hence the adhesiveness to a reinforcing material is excellent, and bending easily occurs. 4. A long material is not used, and therefore production can be easily performed. 5. A yarn can be produced without using an adhesive agent.

## Claims

1. A yarn (1) wherein said yarn (1) is formed by filling an interior of a tubular member (3) configured by knitting or braiding a fibrous material (2), with fibrous expanded graphites (4) having a length of 200 mm, and a section in which an aspect ratio is set to 1 to 5, the aspect ratio being a value obtained by dividing a width by a thickness, while shifting their end portions from one another by 20 mm or 30 mm,

2. A yarn (1) according to claim 1, wherein the aspect ratio is set to 1 to 3.

3. A yarn (1) according to claim 1 or 2, wherein the thickness of said fibrous expanded graphites (4) is set to 0.25 mm to 0.50 mm.

4. A gland packing (5) wherein said gland packing (5) is configured into a string-like shape by bundling plural yarns (1) according to any one of claims 1 to 3, and twisting or braiding said bundle yarns (1).

## Patentansprüche

1. Garn (1), wobei das Garn (1) durch Füllen eines Inneren eines röhrenförmigen Elements (3), das durch Wirken oder Flechten eines Fasermaterials (2) ausgebildet ist, mit faserförmigen Blähgraphiten (4) mit einer Länge von 200 mm und einem Querschnitt, in dem ein Seitenverhältnis auf 1 bis 5 eingestellt ist, wobei das Seitenverhältnis ein Wert ist, der durch Dividieren einer Breite durch eine Dicke gewonnen ist, unter Verschiebung ihrer Endabschnitte um 20 mm oder 30 mm voneinander gebildet ist.

2. Garn (1) gemäß Anspruch 1, bei dem das Seitenverhältnis auf 1 bis 3 eingestellt ist.

3. Garn (1) gemäß Anspruch 1 oder 2, bei dem die Dicke der faserförmigen Blähgraphite (4) auf 0,25 mm bis 0,50 mm eingestellt ist.

4. Stopfbuchspackung (5), wobei die Stopfbuchspackung (5) durch Bündeln mehrerer Garne (1) gemäß einem der Ansprüche 1 bis 3 und Verdrillen oder Verflechten der Bündelgarne (1) zu einer fadenartigen Form ausgebildet ist.

## Revendications

1. Fil (1), dans lequel ledit fil (1) est formé en remplissant un intérieur d'un élément tubulaire (3) configuré en tricotant ou en tressant une matière fibreuse (2), avec des graphites fibreux expansés (4) ayant une longueur de 200 mm, et une section dans laquelle un rapport d'aspect est défini de 1 à 5, le rapport d'aspect étant une valeur obtenue en divisant une largeur par une épaisseur, tout en décalant leurs parties extérieures l'une de l'autre de 20 mm ou 30 mm.

2. Fil (1) selon la revendication 1, dans lequel le rapport d'aspect est défini de 1 à 3.

3. Fil (1) selon la revendication 1 ou 2, dans lequel l'épaisseur desdits graphites expansés fibreux (4) est définie de 0,25 mm à 0,50 mm.

4. Garniture de presse-étoupe (5), dans laquelle ladite garniture de presse-étoupe (5) est configurée en une forme de ficelle en regroupant des fils pluriels (1) selon une quelconque des revendications 1 à 3, et en entortillant ou en tressant lesdits fils de regroupement (1).
